(19) Europäisches Patentamt
European Patent Office
Office européen des brevets

(11) **EP 3 334 791 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **16797529.1**

(22) Anmeldetag: **15.11.2016**

(51) Int Cl.:
***C09D 109/00*** (2006.01)

(86) Internationale Anmeldenummer:
**PCT/EP2016/077759**

(87) Internationale Veröffentlichungsnummer:
**WO 2017/085071 (26.05.2017 Gazette 2017/21)**

(54) **KORROSIONSSCHUTZZUSAMMENSETZUNG UMFASSEND POLYISOBUTYLENE**

ANTI-CORROSION COMPOSITION COMPRISING POLYISOBUTYLENES

COMPOSITION ANTICORROSION COMPRENANT DES POLYISOBUTYLÈNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2015 DE 102015119789**

(43) Veröffentlichungstag der Anmeldung:
**20.06.2018 Patentblatt 2018/25**

(73) Patentinhaber: **DENSO-Holding GmbH & Co.**
**51371 Leverkusen (DE)**

(72) Erfinder:
• **KAISER, Thomas, Markus**
**52459 Inden (DE)**
• **GRYSHCHUK, Oleg**
**51381 Leverkusen (DE)**

(74) Vertreter: **Geskes, Christoph**
**Geskes Patent- und Rechtsanwälte**
**Gustav-Heinemann-Ufer 74b**
**50968 Köln (DE)**

(56) Entgegenhaltungen:
**EP-A1- 3 059 485     US-A1- 2014 113 844**

**Beschreibung**

Die vorliegende Erfindung betrifft eine Korrosionsschutzzusammensetzung umfassend Polyisobutylene als auch deren Verwendung zum Schutz von Rohren und Rohre umfassenden Anlagen sowie sonstigen Anlagen und Einbauten als auch ein Verfahren zur Erzielung eines Korrosionsschutzes und ein mindestens einschichtiges Wickelband, umfassend die erfindungsgemäße Zusammensetzung.

Korrosionsschutzzusammensetzungen und Korrosionsschutzsysteme beispielsweise für Rohranlagen wie Pipelines, aber auch für sonstige technische Anlagen, sind vielfältig aus dem Stand der Technik bekannt. So offenbart die EP 0 421 607 A1 ein Bandumwicklungssystem zum Schutz von rohrförmigen Gegenständen, das eine Innenumwicklung, die die Oberfläche des zu schützenden Gegenstandes bedeckt, und eine über die Innenwicklung angeordnete Außenumwicklung umfasst, wobei die Innenumwicklung eine stoßfeste Schicht mit einer Klebeschicht auf ihrer inneren Oberfläche und eine Schicht auf ihrer äußeren Oberfläche umfasst, und wobei die Außenumwicklung eine Trägerschicht mit einer Schicht auf mindestens einer ihrer Oberflächen umfasst, wobei die Innenumwicklung und die Außenumwicklung warmschmelzbares Material einschließen, wobei das Bandumwicklungssystem auf dem rohrförmigen Gegenstand so aufgebracht wird, dass bei Erwärmen und Abkühlen die Außenumwicklung mit der Innenumwicklung warmverschmolzen und dadurch eine vollständig geschlossene schützende Beschichtung gebildet wird. Durch das dort offenbarte Bandumwicklungssystem soll die Aufgabe gelöst werden, eine Verbesserung gegenüber zerstörerischen äußeren Kräften herbeizuführen, indem ein kontinuierliches, nahtloses, schützendes Bandumwicklungssystem zur Verfügung gestellt wird. Eine der Klebstoffschichten kann beispielsweise aus Butylkautschuk hergestellt sein. Als warmschmelzbares Material werden beispielsweise Etylenvinylacetat, Etylenmethylacrylat und Polyethylen niedriger Dichte eingesetzt. Problematisch an dem in EP 0 421 607 A1 offenbarten Bandumwicklungssystem ist gerade bei höheren Temperaturen umhüllter Rohrsysteme und technischer Anlagen gleich welcher Art der Kontakt zwischen z. B. der Außenseite eines Pipeline-Rohres mit der Klebstoffschicht, beispielsweise aus Butylkautschuk, die sich von der Außenseite des Pipeline-Rohres lösen kann.

Entsprechende Probleme ergeben sich auch dann, wenn Korrosionsschutzzusammensetzungen nicht in Bandform, sondern beispielsweise in Form einer Spachtelmasse eingesetzt werden. Auch hier ist gerade bei hohen Temperaturen oftmals eine nicht hinreichende Haftung der Masse auf beispielsweise Stahloberflächen gegeben. Die Haftung von Massen oder Bändern wird insbesondere durch die Schälfestigkeit, auch Schälwiderstand genannt, beschrieben, und ist gemäß DIN 12068 in der Version 1999 - 03 bestimmbar. Jedoch nicht nur bei hohen Temperaturen, sondern oftmals auch schon bei Raumtemperaturen (20°C oder 23°C) ist die vorstehend genannte Haftung oftmals verbesserungswürdig. Eine verbesserte Haftung wird im Stand der Technik daher oftmals durch Einsatz eines lösemittelhaltigen Primers/Haftvermittlers erzeugt.

In der nachveröffentlichten EP 3 059 485 A1 wird ein Metallrohr mit einer antikorrosiven Decklage aus Polyolefinen offenbart, wobei ein Polyolefin-basiertes Klebemittel, vorzugsweise in einer Stärke von 0,3 bis 5 mm, auf einer Polyethylen- oder Polypropylen-Beschichtungslage, vorzugsweise mit einer Stärke von 1 bis 10 mm aufgebracht ist. Das Polyolefinbasierte Klebemittel enthält eine organische Phase umfassend im Wesentlichen gesättigte Kohlenwasserstoffe, nämlich amorphes Polypropylen, Ethylen-Propylen-Copolymere oder Poly(iso)Butylen-(Co)Polymere.

Es ist daher Aufgabe der vorliegenden Erfindung, eine Korrosionsschutzzusammensetzung zur Verfügung zu stellen, welche eine verbesserte Haftung auf Oberflächen gleich welcher Art, beispielsweise Rohren oder Rohre umfassenden Anlagen einschließlich Pipelines, sowie sonstigen Einbauten zur Verfügung stellt, und dabei vorzugsweise weiterhin auch eine verbesserte mechanische Belastbarkeit aufweist.

Diese Aufgabe wird gelöst durch eine Korrosionsschutzzusammensetzung umfassend mindestens ein erstes Polyisobutylen mit einem Staudinger-Index $J_0$ in einem Bereich von etwa 15 cm$^3$/g bis etwa 98 cm$^3$/g und einer mittleren relativen Molmasse $\overline{M}_v$ in einem Bereich von etwa 14.000 g/mol, bevorzugt von etwa 32.000 g/mol, bis etwa 280.000 g/mol, bevorzugt bis etwa 250.000 g/mol, und mindestens ein zweites Polyisobutylen mit einem Staudinger-Index $J_0$ in einem Bereich von etwa 105 cm$^3$/g bis etwa 238 cm$^3$/g und einer mittleren relativen Molmasse $\overline{M}_v$ in einem Bereich von etwa 270.000 g/mol, bevorzugt von etwa 350.000 g/mol, bis etwa 970.000 g/mol, bevorzugt bis etwa 900.000 g/mol. Der Staudinger-Index $J_0$ wurde früher auch als Intrinsische Viskosität bezeichnet. Er wird berechnet aus der Flusszeit bei 20°C durch eine Kapilare eines Ubbelohde-Viskosimeters nach der folgenden Formel (Schulz-Blaschke-Gleichung):

$$J_0 = \eta_{sp}/c \ (1+0{,}31^\times \eta_{sp}) \ cm^3/g$$

wobei

$$\eta_{sp} = \frac{t}{t_o} - 1 \text{ (spezifische Viskosität)},$$

wobei t die Fließzeit der Lösung mit einer Hagenbach-Couette Korrektur, $t_0$ die Fließzeit des Lösemittels mit Hagenbach-Couette Korrektur und c die Konzentration der Lösung in g/cm$^3$ angibt. Die mittlere relative Molmasse $\overline{M}_v$ (Viskositäts-mittel) berechnet sich aus der folgenden Formel:

$$\sqrt[0.65]{\frac{J_o \times 10^2}{3.06}}$$

Polyisobutylene im Sinne der vorliegenden Erfindung werden bevorzugt über eine kationische Polymerisation von Isobuten (2-Methylpropen) synthetisiert in einem Temperaturbereich zwischen etwa -100°C und etwa 0°C. Die Temperatur beeinflusst dabei die Molmasse des solchermaßen erzeugten Polyisobutylens, je niedriger die Temperatur ist, desto höher ist die Molmasse desselben. Üblicherweise werden Bortrifluorid oder Aluminiumtrichlorid in wässriger oder alkoholischer Lösung als Initiatoren eingesetzt.

Das mindestens eine erste Polyisobutylen weist vorteilhafterweise einen Staudinger-Index $J_0$ in einem Bereich von etwa 22 cm$^3$/g bis etwa 65 cm$^3$/g auf, und noch weiter bevorzugt einen Staudinger-Index $J_0$ in einem Bereich von etwa 25 cm$^3$/g bis etwa 45 cm$^3$/g. Bevorzugt weist das mindestens eine erste Polyisobutylen eine mittlere relative Molmasse $\overline{M}_v$ (Viskositätsmittel) in einem Bereich von etwa 24.000 g/mol, bevorzugt von etwa 35.000 g/mol, bis etwa 130.000 g/mol, bevorzugt bis etwa 95.000 g/mol, und weiter bevorzugt eine mittlere relative Molmasse $\overline{M}_v$ in einem Bereich von etwa 30.000 g/mol, bevorzugt von etwa 37.000 g/mol, bis etwa 75.000 g/mol, bevorzugt bis etwa 70.000 g/mol, auf. Das mindestens eine erste Polyisobutylen ist vorteilhafterweise in einer Menge in einem Bereich von etwa 28 Gew.-% bis etwa 60 Gew.-%, weiter bevorzugt in einer Menge in einem Bereich von etwa 33 Gew.-% bis etwa 50 Gew.-%, jeweils bezogen auf die Gesamtmenge der Zusammensetzung, von dieser umfasst.

Das mindestens eine zweite Polyisobutylen weist bevorzugt einen Staudinger-Index $J_0$ in einem Bereich von etwa 106 cm$^3$/g bis etwa 160 cm$^3$/g auf. Bevorzugt weist das mindestens eine zweite Polyisobutylen eine mittlere relative Molmasse $\overline{M}_v$ in einem Bereich von etwa 280.000 g/mol, bevorzugt von etwa 300.000 g/mol, bis etwa 600.000 g/mol, bevorzugt bis etwa 525.000 g/mol, auf. Bevorzugt ist das mindestens eine zweite Polyisobutylen in einer Menge in einem Bereich von etwa 10 Gew.-% bis etwa 35 Gew.-%, weiter bevorzugt in einer Menge in einem Bereich von etwa 13 Gew.-% bis etwa 28 Gew.-%, jeweils bezogen auf die Gesamtmenge der Zusammensetzung, von dieser umfasst.

Das Verhältnis des mindestens einen ersten Polyisobutylens, also der Gesamtmenge des eingesetzten ersten Polyisobutylens, auch wenn eine Mischung vorliegt, zu dem mindestens einen zweiten Polyisobutylen, das heißt der Gesamtmenge des zweiten Polyisobutylens, auch wenn dies in einer Mischung vorliegt, liegt vorteilhafterweise in einem Bereich von etwa 2,5 : 1 bis etwa 1 : 2,5, weiter bevorzugt in einem Bereich von etwa 2,2 : 1 bis etwa 1,2 : 1.

Die erfindungsgemäße Zusammensetzung weist vorteilhafterweise gute Werte für die Schälfestigkeit und damit eine gute Haftung der erfindungsgemäßen Korrosionsschutzzusammensetzung auf beispielsweise Stahloberflächen von Rohren oder ähnlichem bei gleichzeitig gewünschtem kohäsivem Trennbild auf. Im Unterschied zu einer kohäsiven Trennung wäre nachteilig eine adhäsive Trennung bzw. ein adhäsives Trennbild, welches zwischen einer Korrosionsschutzzusammensetzung und dem diesem bedeckenden Material beispielsweise einem Stahlrohr, erhalten werden würde. Bei einer kohäsiven Trennung bzw. kohäsiven Trennbild erfolgt ein Verbleib der Korrosionsschutzzusammensetzung bei Abhebung derselben von dem geschützten Produkt zumindest in Teilen auf dem abgedeckten Produkt, beispielsweise einem Stahlrohr. Die Vorsehung einer Mischung mindestens eines ersten und mindestens eines zweiten Polyisobutylens führt darüber hinaus vorteilhafterweise dazu, dass eine Korrosionsschutzzusammensetzung erhalten wird, welche nicht nur hinreichend fließfähig ist, so dass diese in Form einer Spachtelmasse eingesetzt werden kann, sondern sogleich auch beispielsweise in Bandform oder Mattenform, beispielsweise in Wickelbändern, eingesetzt werden kann.

Die erfindungsgemäße Korrosionsschutzzusammensetzung weist neben dem mindestens einen ersten und dem mindestens einen zweiten Polyisobutylen vorteilhafterweise keinen Weichmacher, insbesondere keinen Weichmacher in Form eines Prozessöles auf. Der Einsatz eines solchen Weichmachers kann erspart bleiben, da das mindestens eine erste Polyisobutylen aufgrund des relativ geringen Molekulargewichtes desselben in einer eher flüssigen, nicht allzu viskosen Form zur Verfügung gestellt ist, sodass der Zusatz eines Weichmachers nicht mehr von Nöten ist. Gleichwohl kann im Sinne der vorliegenden Erfindung vorgesehen sein, dass ein Weichmacher, insbesondere in Form eines Prozessöles, eingesetzt wird. Soweit vorgesehen, kann die erfindungsgemäße Korrosionsschutzzusammensetzung als Weichmacher mindestens ein Prozessöl umfassen, bevorzugt in einer Menge in einem Bereich von etwa 0,5 Gew.-% bis etwa 10 Gew.-%, weiter bevorzugt in einer Menge in einem Bereich von etwa 2 Gew.-% bis etwa 8 Gew.-%, jeweils bezogen auf die Gesamtmenge der erfindungsgemäßen Zusammensetzung.

Die erfindungsgemäße Korrosionsschutzzusammensetzung weist den Vorteil auf, dass diese bereits bei Raumtemperaturen, beispielsweise 23 °C, gute Werte für die Schälfestigkeit/Schälwiderstand gemäß DIN 10268 in der Version 1999-03 aufweist, insbesondere Werte, welche größer als etwa 5 N/cm, noch weiter bevorzugt größer als etwa 10 N/cm, sind, wobei bevorzugt die Werte für die Schälfestigkeit/der Schälwiderstand gemäß DIN EN 10268 in der Version 1999-03 in einem Bereich zwischen etwa 6 N/cm und etwa 40 N/cm, noch weiter bevorzugt zwischen etwa 8 N/cm und etwa 35 N/cm, liegen. Die vorgenannten Werte beziehen sich auf die mechanische Schälprüfung gemäß der DIN EN 10268 in der Version 1999-03, und zwar bezogen auf sowohl eine Aufbringung der Korrosionsschutzzusammensetzung auf eine Werksumhüllung eines beispielsweise Rohres wie einer Gasleitung oder Pipeline, als auch bezogen auf eine nicht umhüllte Rohraußenfläche, beispielsweise eines Stahlrohres.

Die erfindungsgemäße Korrosionsschutzzusammensetzung weist aufgrund der guten Werte für die Schälfestigkeit bzw. den Schälwiderstand eine gute mechanische Belastbarkeit auf. Dies gilt auch bei höheren Temperaturen. Auch weist die erfindungsgemäße Korrosionsschutzzusammensetzung vorteilhafterweise eine gute Haftung auf Untergründen gleich welcher Art auf, insbesondere auf Rohren wie Pipelines oder Rohren aufweisenden Anlagen, gleich ob diese bereits mit einer Werksumhüllung versehen sind oder aber eine solche nicht aufweisen, im letzteren Fall also eine metallische Oberfläche, insbesondere eine Stahloberfläche zur Aufbringung der Korrosionsschutzzusammensetzung, zur Verfügung stellen. Besonders vorteilhafterweise ist es möglich, dass die erfindungsgemäße Korrosionsschutzzusammensetzung ohne vorherige Aufbringung eines Primers/Haftvermittlers aufgebracht werden kann, wobei der arbeits- und zeitaufwendige Schritt der Vorbehandlung mit diesen Produkten entfällt. Gleichwohl ist es im Sinne der vorliegenden Erfindung nicht ausgeschlossen, dass ein Primer oder Haftvermittler eingesetzt wird. Geeignete Produkte bestehen beispielsweise aus Butylkautschuk in Mischungen mit Kohlenwasserstoffharzen in Benzin als Lösemittel, und sind beispielsweise erhältlich unter der Bezeichnung DENSOLEN Primer, DENSO GmbH, Leverkusen, Deutschland.

Besonders bevorzugt umfasst die erfindungsgemäße Korrosionsschutzzusammensetzung weiterhin mindestens ein drittes Polyisobutylen mit einem Staudinger-Index $J_0$ in einem Bereich von etwa 240 cm$^3$/g bis etwa 900 cm$^3$/g und mit einer mittleren relativen Molmasse $\overline{M}_v$ in einem Bereich von etwa 950.000 g/mol, bevorzugt von etwa 980.000 g/mol, bis etwa 7.500.000 g/mol, bevorzugt bis etwa 5.500.000 g/mol. Bevorzugt weist das mindestens eine dritte Polyisobutylen einen Staudinger-Index $J_0$ in einem Bereich von etwa 400 cm$^3$/g bis etwa 800 cm$^3$/g, und noch weiter bevorzugt einen Staudinger-Index $J_0$ in einem Bereich von etwa 500 cm$^3$/g bis etwa 700 cm$^3$/g, auf. Bevorzugt weist das mindestens eine dritte Polyisobutylen eine mittlere relative Molmasse $\overline{M}_v$ in einem Bereich von etwa 1.500.000 g/mol, bevorzugt von etwa 2.000.000 g/mol, bis etwa 6.000.000 g/mol, bevorzugt bis etwa 5.000.000 g/mol, weiter bevorzugt in einem Bereich von etwa 3.000.000 g/mol bis etwa 5.100.000 g/mol, bevorzugt bis etwa 4.800.000 g/mol, auf. Das mindestens eine dritte Polyisobutylen ist vorteilhafterweise in einer Menge in einem Bereich von etwa 1 Gew.-% bis etwa 20 Gew.-%, weiter bevorzugt in einer Menge in einem Bereich von etwa 2 Gew.-% bis etwa 10 Gew.-%, noch weiter bevorzugt in einer Menge in einem Bereich von etwa 3 Gew.-% bis etwa 8 Gew.-%, jeweils bezogen auf die Gesamtmenge der Zusammensetzung, von dieser umfasst.

Besonders bevorzugt umfasst die erfindungsgemäße Korrosionsschutzzusammensetzung genau ein erstes, genau ein zweites und genau ein drittes Polyisobutylen, wie weiter vorstehend beschrieben. Das Verhältnis des mindestens einen ersten Polyisobutylens, also der Gesamtmenge des eingesetzten ersten Polyisobutylens, auch in Form einer Mischung, zu dem mindestens einen dritten Polyisobutylen, das heißt der Gesamtmenge des dritten Polyisobutylens, auch wenn dieses eine Mischung darstellt, liegt vorteilhafterweise in einem Bereich von etwa 20 : 1 bis etwa 4 : 1, weiter bevorzugt in einem Bereich von etwa 12 : 1 bis etwa 6 : 1. Das Verhältnis des mindestens einen zweiten Polyisobutlyens, also der Gesamtmenge des eingesetzten zweiten Polyisobutylens, auch in Form einer Mischung, zu dem mindestens einen dritten Polyisobutylen, der Gesamtmenge des dritten Polyisobutylen, das heißt auch wenn dieses in einer Mischung vorliegt, liegt vorteilhafterweise in einem Bereich von etwa 8 : 1 bis etwa 1 : 1, weiter bevorzugt in einem Bereich von etwa 6 : 1 bis etwa 2 : 1. Die erfindungsgemäß eingesetzten Polyisobutylene, also sowohl das erste, das zweite, als auch das dritte Polyisobutylen, weisen vorteilhafterweise eine Glasübergangstemperatur $T_g$, (kalorimetrisch durch DSC gemessen) von weniger als -50°C, weiter bevorzugt, weniger als - 58°C, auf. Besonders bevorzugt liegt die Glasübergangstemperatur des mindestens einen ersten, des mindestens einen zweiten und des mindestens einen dritten Polyisobutylens in einem Bereich von etwa -55°C bis etwa -68°C, weiter bevorzugt in einem Bereich von etwa -58°C bis etwa -66°C. Das höher molekulare, mindestens eine dritte Polyisobutylen, kann damit noch als eine hochviskose Flüssigkeit angesprochen werden, und weist eine gewisse Kriechneigung auf.

Besonders bevorzugt umfasst die erfindungsgemäße Korrosionsschutzzusammensetzung genau ein erstes Polyisobutylen in einer Menge in einem Bereich von etwa 30 Gew.-% bis etwa 48 Gew.-%, genau ein zweites Polyisobutylen in einer Menge in einem Bereich von etwa 15 Gew.-% bis etwa 25 Gew.-%, genau ein drittes Polyisobutylen in einer Menge in einem Bereich von etwa 3 Gew.-% bis etwa 7 Gew.-%, wobei die Angaben jeweils auf die Gesamtmenge der erfindungsgemäßen Zusammensetzung bezogen sind.

In einer weiteren bevorzugten Ausführungsform weist unabhängig voneinander

- das mindestens eine erste Polyisobutylen einen Staudinger-Index $J_0$ in einem Bereich von etwa 15 cm$^3$/g bis etwa 98 cm$^3$/g und eine mittlere relative Molmasse $\overline{M}_v$ (Viskositätsmittel) in einem Bereich von etwa 13.800 g/mol bis etwa 247.000 g/mol; und

- das mindestens eine zweite Polyisobutylen einen Staudinger-Index $J_0$ in einem Bereich von etwa 105 cm$^3$/g bis etwa 238 cm$^3$/g und eine mittlere relative Molmasse $\overline{M}_v$ (Viskositätsmittel) in einem Bereich von etwa 275.000 g/mol bis etwa 968.000 g/mol; und

- das mindestens eine dritte Polyisobutylen einen Staudinger-Index $J_0$ in einem Bereich von etwa 240 cm$^3$/g bis etwa 900 cm$^3$/g und eine mittlere relative Molmasse $\overline{M}_v$ (Viskositätsmittel) in einem Bereich von etwa 980.000 g/mol bis etwa 7.500.000 g/mol auf.

In einer weiteren bevorzugten Ausführungsform umfasst die erfindungsgemäße Korrosionsschutzzusammensetzung ein erstes, zweites und drittes Polyisobutylen, das jeweils die vorgenannten Werte für den Staudinger-Index $J_0$ und die mittlere relative Molmasse $\overline{M}_v$ (Viskositätsmittel) aufweist, insbesondere genau ein erstes, genau ein zweites und genau ein drittes Polyisobutylen, das jeweils die vorgenannten Werte für den Staudinger-Index $J_0$ und die mittlere relative Molmasse $\overline{M}_v$ (Viskositätsmittel) aufweist.

Bevorzugt umfasst die erfindungsgemäße Korrosionsschutzzusammensetzung neben den genannten Polyisobutylenen mindestens ein Füllmaterial, mindestens ein Antioxidationsmittel, mindestens ein Vernetzungsmittel, mindestens ein Elastomer und/oder ein Stabilisationsmittel. Die genannten weiteren Bestandteile können alleine oder in Kombination der erfindungsgemäßen Zusammensetzung zugesetzt sein. Besonders bevorzugt umfasst die erfindungsgemäße Korrosionsschutzzusammensetzung neben dem mindestens einen ersten und dem mindestens einen zweiten Polyisobutylen, weiter bevorzugt auch neben dem mindestens einen dritten Polyisobutylen, mindestens ein Füllmaterial. Das mindestens eine Füllmaterial ist vorzugsweise in einer Menge in einem Bereich von etwa 20 Gew.-% bis etwa 70 Gew.-%, weiter bevorzugt in einer Menge in einem Bereich von etwa 30 Gew.-% bis etwa 65 Gew.-%, und noch weiter bevorzugt in einer Menge in einem Bereich von etwa 33 Gew.-% bis etwa 50 Gew.-%, jeweils bezogen auf die Gesamtmenge der Zusammensetzung, von dieser umfasst. Besonders bevorzugt ist das mindestens eine Füllmaterial pulverförmig oder faserförmig ausgebildet. Unter den Begriff faserförmig fallen im Sinne der vorliegenden Erfindung auch solche Füllmaterialien, welche eine nadelförmige Struktur aufweisen. Besonders bevorzugt umfasst die erfindungsgemäße Zusammensetzung mindestens ein erstes pulverförmiges Füllmaterial und mindestens ein zweites faserförmiges Füllmaterial. Besonders bevorzugt ist bei einer solchen kombinierten Zugabe mindestens eines pulverförmigen und mindestens eines faserförmigen Füllmateriales das faserförmige Füllmaterial in einer Menge bis maximal zu derjenigen des pulverförmigen Füllmateriales zugegeben. Ein pulverförmiges als auch ein faserförmiges Füllmaterial können in einer Menge in einem Bereich von etwa 10 Gew.-% bis etwa 40 Gew.-%, bevorzugt in einer Menge in einem Bereich von etwa 12 Gew.-% bis etwa 25 Gew.-%, jeweils bezogen auf die Gesamtmenge der Zusammensetzung, jeweils von der Zusammensetzung umfasst sein.

Bevorzugt ist das mindestens eine Füllmaterial ausgewählt aus einer Gruppe der pulverförmigen mineralischen Füllstoffe oder der mineralischen und/oder organischen faserartigen Füllstoffe. Beispielsweise kann es aus Metall, Zinkoxid, Cellulosefasern oder Wollastonit in Nadelform sein. Es kann auch ausgewählt sein aus einer Gruppe organischer Fasern wie beispielsweise aus Acrylnitrilfasern mit einer Länge in einem Bereich von etwa 1,5 mm bis etwa 20 mm, weiter bevorzugt mit einer Länge in einem Bereich von etwa 4 mm bis etwa 15 mm, und einer Feinheit in einem Bereich von etwa 0,5 dtex bis etwa 100 dtex, weiter bevorzugt mit einer Feinheit in einem Bereich von etwa 1 dtex bis etwa 20 dtex, jeweils gemessen gemäß ISO 1144 in der Version von 1973. Soweit ein pulverförmiger Füllstoff, insbesondere ein mineralischer pulverförmiger Füllstoff, eingesetzt ist, weist dieser vorteilhafterweise einen Rückstand in % bei einer Siebanalyse gemäß der DIN 66165 in der Version 1987-04 bei H-100 (100 μm) von etwa 1 % bis etwa 5 %, bei H-60 (60 μm) von etwa 1 % bis etwa 5 % und bei H-30 (30 μm) in einem Bereich von etwa 1 % bis etwa 5 % auf. Vorteilhafterweise weist die erfindungsgemäße Korrosionsschutzzusammensetzung mindestens ein Füllmaterial auf. Ist das Füllmaterial ein pulverförmiges, ist dieses vorteilhafterweise ausgewählt aus der Gruppe der mineralischen Füllstoffe, ist besonders bevorzugt ein Talkum.

Soweit mindestens ein Antioxidationsmittel vorgesehen ist, kann dieses, vorzugsweise in einer Mischung verschiedener Antioxidationsmittel, in einer Menge in einem Bereich von etwa 0,1 Gew.-% bis etwa 1 Gew.-%, weiter bevorzugt in einer Menge in einem Bereich von etwa 0,15 Gew.-% bis etwa 0,5 Gew.-%, jeweils bezogen auf die Gesamtmenge der erfindungsgemäßen Korrosionsschutzzusammensetzung, von dieser umfasst sein. Soweit in der erfindungsgemäßen Korrosionsschutzzusammensetzung mindestens ein Stabilisationsmittel, das auch als Dispergierhilfsmittel bezeichenbar ist, vorhanden ist, ist dieses vorteilhafterweise ausgewählt aus einer Gruppe umfassend $C_{10}$- bis $C_{24}$-Carbonsäuren, und ist vorteilhafterweise Stearinsäure. Das mindestens eine Stabilisationsmittel ist bevorzugt in einer Menge in einem Bereich von etwa 0,05 Gew.-% bis etwa 0,5 Gew.-%, bezogen auf die Gesamtmenge der Zusammensetzung, von der erfindungsgemäßen Korrosionsschutzzusammensetzung umfasst. Als Stabilisationsmittel können beispielsweise auch Metallsalze der angesprochenen Carbonsäuren, beispielsweise Zinkstearate, oder freie Carbonsäuren, wie beispielsweise freie Fettsäuren mit 12 bis 24 Kohlenstoffatomen, insbesondere Stearinsäure oder Ölsäure, eingesetzt werden.

Des Weiteren kann die erfindungsgemäße Zusammensetzung noch sonstige Zusätze, die üblich und notwendig je nach Einsatzzweck sind, aufweisen. Insbesondere kann die erfindungsgemäße Korrosionsschutzzusammensetzung weiterhin mindestens ein Flammenschutzmittel, mindestens ein Vernetzungsmittel und/oder mindestens ein Elastomer aufweisen. Soweit ein Flammschutzmittel vorgesehen ist, ist dieses vorteilhafterweise in einer Menge in einem Bereich von etwa 0,02 Gew.-% bis etwa 2 Gew.-%, bezogen auf die Gesamtmenge der erfindungsgemäßen Korrosionsschutzzusammensetzung, von dieser umfasst.

Soweit die erfindungsgemäße Korrosionsschutzzusammensetzung mindestens ein Vernetzungsmittel aufweist, ist dieses vorteilhafterweise in einer Menge in einem Bereich von etwa 0,1 Gew.-% bis etwa 10 Gew.-%, weiter bevorzugt in einer Menge in einem Bereich von etwa 0,2 Gew.-% bis etwa 8 Gew.-%, jeweils bezogen auf die Gesamtmenge der erfindungsgemäßen Korrosionsschutzzusammensetzung, von dieser umfasst. Das Vernetzungsmittel ist insbesondere dann vorgesehen, wenn die erfindungsgemäße Korrosionsschutzzusammensetzung Bestandteil eines ein- oder mehrlagigen Bandes, insbesondere eines Wickelbandes für Rohre gleich welcher Art, insbesondere Pipelines, ist. Es kann jedoch auch zugegen sein, wenn die erfindungsgemäße Korrosionsschutzzusammensetzung als Streich- bzw. Spachtelmasse ausgebildet ist. Das mindestens eine Vernetzungsmittel ist vorteilhafterweise ausgewählt aus einer Gruppe umfassend mindestens ein Phenolharz. Phenolharze werden über Vernetzungsreaktionen zu Duroplasten, den sogenannten Phenoplasten, nachgehärtet. Eine derartige Vernetzungsreaktion kann in der erfindungsgemäßen Korrosionsschutzzusammensetzung stattfinden, insbesondere soweit diese mindestens einen Butylkautschuk umfasst, wie weiter unten beschrieben. Phenolharze sind Kondensationsprodukte von Phenol mit Aldehyden, vorzugsweise mit Formaldehyd. Im Sinne der vorliegenden Erfindung ist besonders bevorzugt von der erfindungsgemäßen Korrosionsschutzzusammensetzung umfasst mindestens ein Phenolharz, welches Hydroxymethyl-Gruppen aufweist. Diese Hydroxymethyl-Gruppen stellen die reaktiven bzw. funktionellen Gruppen dar, über welche eine Vernetzungsreaktion, die auch als Selbsthärtungsreaktion angesprochen werden kann, mit den funktionellen Gruppen, d. h. den Kohlenstoff-Kohlenstoff-Doppelbindungen, eines als Elastomer eingesetzten mindestens einen Butylkautschuks oder aber mindestens eines teilweise ungesättigten Polyisobutylens erfolgt. Besonders bevorzugt im Sinne der vorliegenden Erfindung ist das mindestens eine Phenolharz hergestellt aus mindestens einem Phenol oder dessen Derivaten und mindestens einem Aldehyd, ausgewählt aus einer Gruppe umfassend Formaldehyd, Acetaldehyd, Benzaldehyd und/oder Acrolein, wobei besonders bevorzugt Formaldehyd ist. Als Phenolderivate werden insbesondere tetra-Butylphenol, Nonylphenol oder Octylphenol eingesetzt, wobei aber auch Aryl-Derivate, insbesondere Phenylphenol, als auch zweiwertige Phenole wie Resorcin oder Bisphenol A oder Naphthole eingesetzt werden können. Besonders bevorzugt sind Octylphenol-Formaldehyd-Harze. Phenolharze als Vernetzungsmittel sind insbesondere solche, die in die Klasse der sogenannten Resole fallen, d. h. durch eine basisch-katalysierte Reaktion der genannten Ausgangsprodukte hergestellt werden.

In Überlappungsbereichen bei Wicklung eines mindestens zweischichtigen Bandes, welches mindestens eine Schicht der erfindungsgemäßen Korrosionsschutzzusammensetzung als äußere Schicht aufweist, kommt die mindestens eine Schicht der erfindungsgemäßen Korrosionsschutzzusammensetzung in Berührung mit der weiteren Schicht. Diese weitere Schicht, beispielsweise eine Haftvermittlungsschicht, kann dabei vorteilhafterweise Katalysatormittel aufweisen, welche die Vernetzungsreaktion beschleunigen, insbesondere bei niedrigen Temperaturen, beispielsweise bei einer Raumtemperatur von 23°C. Geeignete Katalysatormittel sind ausgewählt aus einer Gruppe umfassend mindestens ein Zinkchlorid, Zinkbromid, Eisenchlorid, Antimonchlorid, Antimonbromid, Zinnbromid, Germaniumchlorid, Kobaltbromid, Nickelchlorid und/oder organische Salze des Zinn oder Zink, wie beispielsweise Zinkstearate oder Zinkoleate, wobei besonders bevorzugt Zinn- oder Zinkhalogenide, und weiter bevorzugt Zinnchlorid und Zinkchlorid, allein oder in Mischung, eingesetzt werden. Das Katalysatormittel ist in dieser weiteren Schicht eines Bandes, die bevorzugt die erfindungsgemäße Korrosionsschutzzusammensetzung nicht enthält, vorteilhafterweise in einer Menge in einem Bereich von etwa 0,1 Gew.-% bis etwa 5 Gew.-%, weiter bevorzugt in einer Menge in einem Bereich von etwa 0,15 Gew.-% bis etwa 4,5 Gew.-%, und noch weiter bevorzugt in einer Menge in einem Bereich von etwa 0,2 Gew.-% bis etwa 4 Gew.-%, jeweils bezogen auf die Gesamtmenge dieser weiteren Schicht, von dieser umfasst.

Wird ein Katalysatormittel vorgesehen, kann vorzugsweise in dem Material, welches dieses umfasst, mindestens ein Co-Reagenz vorgesehen sein, ausgewählt aus einer Gruppe umfassend Divinylfumarat, Divinyladipat und Triallyl-Trichlorbenzol, wobei besonders bevorzugt ein Triallyl-Trichlorbenzol ausgewählt ist. Das Co-Reagenz dient insbesondere der Verträglichmachung des eingesetzten Katalysatormittels in dem Material, in welchem der Katalysator enthalten ist. Das Co-Reagenz ist in dem Material, in dem das Katalysatormittel enthalten ist, vorteilhafterweise in einer Menge in einem Bereich von etwa 0,5 Gew. % bis etwa 5 Gew. %, weiter bevorzugt in einer Menge in einem Bereich von etwa 2 Gew. % bis etwa 4,5 Gew. %, bezogen auf die Gesamtmenge des im Katalysatormittel enthaltenden Materials, von diesem umfasst.

Das mindestens eine Elastomer neben mindestens einem, weiter unten beschriebenen Butylkautschuk ist vorteilhafterweise ausgewählt aus einer Gruppe umfassend mindestens einen Ethylen-Propylen-Dien-Kautschuk. Hierunter werden insbesondere solche Co- oder Block-Co-Polymere als auch Terpolymere verstanden, welche als funktionelle Gruppen eine Kohlenstoff-Kohlenstoff-Doppelbindung aufweisen. Auch hiervon können Gemische eingesetzt werden. Besonders bevorzugt sind Terpolymere, die aus einer Polymerisationsreaktion mit Ethylen, Propylen und einem Dien entstehen. Diese werden auch EPDM-Terpolymere genannt und vereinigen ein gesättigtes Polymerrückgrat mit ungesättigten Resten in Seitengruppen. Besonders bevorzugt im Sinne der vorliegenden Erfindung werden dabei 5-Ethyliden-2-Norbornen, Dicyclopentadien und/oder 5-Vinyliden-2-Norbornen als Dien eingesetzt, und zwar in Mengen bis zu etwa 15 Gew.-%, bevorzugt in Mengen in einem Bereich von etwa 0,3 Gew.-% bis etwa 12 Gew.-%. Im Falle des Einsatzes von 5 Ethyliden-2-Norbornen werden vorzugsweise Mengen in einem Bereich von etwa 4 Gew.-% bis etwa 11 Gew.-% und im Falle eines Einsatzes von Dicyclopentadien Mengen in einem Bereich von etwa 1,0 Gew.-% bis etwa 6,0 Gew.-% eingesetzt. Die vorstehenden Gew.-%-Angaben sind dabei bezogen auf die Gesamtmenge der Monomere, die in einer Polymerisation zu einem EPDM bzw. Ethylen-Propylen-Kautschuk eingesetzt sind.

Bevorzugt ist das mindestens eine Elastomere ausgewählt aus einer Gruppe umfassend mindestens einen Butylkautschuk. Unter dem Begriff Butylkautschuk werden im Sinne der vorliegenden Erfindung insbesondere verstanden Co- oder Block-Co-Polymere von Isobuten mit etwa 0,5 Gew.-% bis etwa 5 Gew.-% Isoprenen, bezogen auf die Gesamtmenge des Butylkautschuks, die insbesondere durch kationische Polymersation hergestellt werden. Über das eingesetzte Isopren und den in diesem vorhandenen Kohlenstoff-Kohlenstoff-Doppelbindungen, die als funktionelle Gruppen wirken, kann eine Vernetzungsreaktion initiiert werden. Im Sinne der vorliegenden Erfindung fallen unter den Begriff Butylkautschuk insbesondere auch halogenierte Butylkautschuke, insbesondere solche, die chloriert bzw. bromiert sind (Chlorobutylkautschuk bzw. Brombutylkautschuk). Es können auch Gemische mehrerer Butylkautschuke eingesetzt werden, dass heißt mehr als mindestens ein Butylkautschuk. Der mindestens eine Butylkautschuk kann dabei in einer Menge in einem Bereich von etwa 1 Gew.-% bis etwa 20 Gew.-%, bevorzugt in einer Menge in einem Bereich von etwa 2 Gew.-% bis etwa 10 Gew.-%, weiter bevorzugt in einer Menge in einem Bereich von etwa 3 Gew.-% bis etwa 8 Gew.-%, bezogen auf die Gesamtmenge der Zusammensetzung, von dieser umfasst sein. Besonders bevorzugt ist der mindestens eine Butylkautschuk ein vorvernetzter (teilweiser vernetzter), der damit nur einen geringeren Anteil ungesättigter Bindungen aufweist als übliche Butylkautschuke. Der mindestens eine teilweise vernetzte Butylkautschuk weist bevorzugt gemäß ISO 289 in der Version 2005 oder gemäß ASTM 1604-04 eine Mooney-Viskosität ML (1+3) bei 127°C in einem Bereich von etwa 30 MU bis etwa 100 MU (Mooney Unit), bevorzugt in einem Bereich von etwa 50 MU bis etwa 95 MU, noch weiter bevorzugt von etwa 65 MU bis etwa 93 MU, und noch weiter bevorzugt von etwa 78 MU bis etwa 91 MU, auf. Die spezifische Dichte des mindestens einen Butylkautschuks liegt vorteilhafterweise bei einer Temperatur von 25 °C gemäß ASTM D1875 in der Version von 2003 in einem Bereich von etwa 0,5 bis etwa 1,1, bevorzugt in einem Bereich von etwa 0,9 bis etwa 0,98. Besonders bevorzugt kann der mindestens eine Butylkautschuk das mindestens eine dritte Polyisobutylen ersetzen, zumindest teilweise. Es können auch Mischungen von dem mindestens einen dritten Polyisobutylen und dem mindestens einen Butylkautschuk vorgesehen werden, bevorzugt in Gew.-% Bereichen, wie vorstehend im Zusammenhang mit dem Butylkautschuk bzw. vorstehend im Zusammenhang mit dem mindestens einen dritten Polyisobutylen genannt. Bevorzugt ist in den vorstehenden und nachfolgenden Mischungen ein vorvernetzter Butylkautschuk mit den vorgenannten Mooney-Viskositäten eingesetzt. Der mindestens eine Butylkautschuk kann in den gleichen Verhältnissen zu dem mindestens einen ersten Polyisobutylen und dem mindestens einen zweiten Polyisobutylen eingesetzt werden, wie das mindestens ein dritte Polyisobutylen, wie vorstehend angegeben. Soweit der mindestens eine Butylkautschuk, insbesondere in Form eines vorvernetzten Butylkautschuks, das mindestens eine dritte Polyisobutylen ersetzt, kann dieses dann in Mischungen mit dem mindestens einen ersten und dem mindestens einen zweiten Polyisobutylen, gegebenenfalls auch mit Füllmaterialien, wie bereits vorstehend definiert, umfasst sein. Eine bevorzugte erfindungsgemäße Korrosionsschutzzusammensetzung umfasst etwa 25 Gew.-% bis etwa 60 Gew.-% des mindestens einen ersten Polyisobutylens, etwa 10 Gew.-% bis etwa 40 Gew.-% des mindestens einen zweiten Polyisobutylens, etwa 1 Gew.-% bis etwa 20 Gew.-% des mindestens einen Butylkautschuks, insbesondere eines vorvernetzten Butylkautschuks, und etwa 15 Gew.-% bis etwa 50 Gew.-% mindestens eines Füllmaterials. In einer weiter bevorzugten Ausführungsform umfasst die Zusammensetzung das mindestens eine erste Polyisobutylen in einer Menge in einem Bereich von etwa 25 Gew.-% bis etwa 60 Gew.-%, das mindestens eine zweite Polyisobutylen in einer Menge in einem Bereich von etwa 10 Gew.-% bis etwa 40 Gew.-%, das mindestens eine dritte Polyisobutylen in einer Menge in einem Bereich von etwa 1 Gew.-% bis etwa 15 Gew.-% und den mindestens ein Butylkautschuk, insbesondere einen vorvernetzten, in einer Menge in einem Bereich von etwa 1 Gew.-% bis etwa 15 Gew.-%, und mindestens ein Füllmaterial in einer Menge in einem Bereich von etwa 20 Gew.-% bis etwa 50 Gew.-%, wobei die Mengen jeweils bezogen sind auf die Gesamtmenge der erfindungsgemäßen Korrosionsschutzzusammensetzung.

In einer besonders bevorzugten Ausführungsform umfasst die erfindungsgemäße Korrosionsschutzzusammensetzung etwa 35 Gew.-% bis etwa 45 Gew.-% genau eines ersten Polyisobutylens, etwa 15 Gew.-% bis etwa 25 Gew.-% genau eines zweiten Polyisobutylens, etwa 3 Gew.-% bis etwa 7 Gew.-% genau eines dritten Polyisobutylens und etwa 30 Gew.-% bis etwa 40 Gew.-% zweier Füllmaterialien, wobei ein Füllmaterial ein mineralisch pulverförmiges Füllmaterial ist und das andere Füllmaterial eine mineralisch nadelförmiges Füllmaterial ist. In einer weiter bevorzugten Ausführungsform umfasst die erfindungsgemäße Korrosionsschutzzusammensetzung etwa 35 Gew.-% bis etwa 45 Gew.-% genau eines ersten Polyisobutylens, etwa 15 Gew.-% bis etwa 25 Gew.-% genau eines zweiten Polyisobutylens, etwa 3 Gew.-% bis etwa 7 Gew.-% mindestens eines vorvernetzten Butylkautschuks wie vorstehend definiert, und etwa 30 Gew.-% bis etwa 40 Gew.-% zweier Füllmaterialien, wobei das eine Füllmaterial ein mineralisches pulverförmiges Füllmaterial und das andere Füllmaterial ein mineralisch nadelförmiges Füllmaterial ist.

In den vorgenannten bevorzugten und besonders bevorzugten Zusammensetzungen kann zudem, soweit notwendig, etwa 0,1 Gew.-% bis etwa 0,5 Gew.-% mindestens eines Stabilisationsmittels und/oder etwa 0,15 Gew.-% bis etwa 0,6 Gew.-% mindestens eines Antioxidationsmittels, jeweils bezogen auf die Gesamtmenge der erfindungsgemäßen Zusammensetzung, von dieser umfasst sein.

Soweit in der vorliegenden Erfindung der Begriff "etwa" in Bezug auf Werte, Wertbereiche oder werthaltige Begriffe verwendet wird, ist hierunter dasjenige zu verstehen, was der Fachmann im gegebenen Zusammenhang als fachmännisch üblich ansehen wird. Insbesondere sind Abweichungen der angegebenen Werte, Wertbereiche oder werthaltige Begriffe von +-10 %, bevorzugt +-5 %, weiter bevorzugt +-2 %, von dem Begriff "etwa" umfasst.

Die erfindungsgemäße Korrosionsschutzzusammensetzung kann weiterhin mindestens einen Tackifier, insbesondere ein Kohlenwasserstoffharz, in einer Menge in einem Bereich von etwa 5 Gew.-% bis etwa 25 Gew.-%, weiter bevorzugt in einer Menge in einem Bereich von etwa 8 Gew.-% bis etwa 20 Gew.-%, jeweils bezogen auf die Gesamtmenge der erfindungsgemäßen Korrosionsschutzzusammensetzung, umfassen.

Besonders bevorzugt liegt die erfindungsgemäße Korrosionsschutzzusammensetzung in Bandform oder Mattenform vor. Besonders bevorzugt ist die Bandform.

Besonders bevorzugt ist das Band mindestens einlagig aufgebaut, weiter bevorzugt ist es mindestens zweilagig aufgebaut, kann aber auch drei-, vier-, fünf- oder sonst wie mehrlagig ausgebildet sein. So kann dieses beispielsweise derart aufgebaut sein, dass es zwei äußere Lagen umfassend die erfindungsgemäße Korrosionsschutzzusammensetzung aufweist, welche eine innere Lage, gebildet aus einer Trägerfolie, insbesondere einer solchen hergestellt aus mindestens einem Polyethylen und/oder Polypropylen, bevorzugt aus einem Polyethylen, umfassen. Dabei kann die Trägerfolie, die je nach Stärke auch als Streckbremse wirken kann, auf einer oder beiden Seiten derselben, die den Schichten aus der erfindungsgemäßen Korrosionsschutzzusammensetzung zugewandt sind, eine Haftvermittlungsschicht aufweisen.

Es kann auch vorgesehen sein, dass das Band nur eine einzige Lage aus der erfindungsgemäßen Korrosionsschutzzusammensetzung aufweist, welche mit einer Trägerfolie, insbesondere einer solchen, wie vorstehend definiert, verbunden ist, wobei die Trägerfolie auf einer oder beiden Seiten eine Haftvermittlungsschicht aufweisen kann. Bei einem solchen Aufbau weist die Trägerfolie, die dann in erster Linie einer Stabilisierung der Lage aus der erfindungsgemäßen Korrosionsschutzzusammensetzung dient, eine gewisse Stärke, bevorzugt in einem Bereich von etwa 0,2 mm bis etwa 1,2 mm, weiter bevorzugt von etwa 0,3 mm bis etwa 0,7 mm, auf. Weiter bevorzugt weist die Trägerfolie auf ihren beiden Außenseiten Haftvermittlungsschichten mit gleichen oder unterschiedlichen Zusammensetzungen auf. So kann die Trägerfolie auf ihrer der aus der erfindungsgemäßen Korrosionsschutzzusammensetzung gebildeten Lage zugewandten Seite vorzugsweise eine Haftvermittlungsschicht aufweisen, die aus dem gleichen Material wie die Trägerfolie und dem mindestens einen ersten und/oder mindestens einen zweiten Polyisobutylen und/oder mindestens einen Butylkautschuk, wie weiter oben beschrieben, bevorzugt aus dem mindestens einen ersten und/oder zweiten Polyisobutylen und mindestens einen Butylkautschuk, noch weiter bevorzugt aus dem mindestens einen Butylkautschuk, und noch weiter bevorzugt ausschließlich aus den vorgenannten Materialien, der Lage aus der erfindungsgemäßen Korrosionsschutzzusammensetzung gebildet ist. Die weitere Haftvermittlungsschicht, die auf der der Lage aus der erfindungsgemäßen Korrosionsschutzzusammensetzung abgewandten Seite der Trägerfolie aufgebracht ist, kann hingegen, insbesondere bei Vorsehung eines mindestens einlagigen zweiten Bandes, welches insbesondere als ein einen mechanischen Schutz vermittelndes Band um das Band mit der erfindungsgemäßen Korrosionsschutzzusammensetzung auf dem betreffenden Produkt wickelbar ist, neben mindestens einem ersten und/oder mindestens einem zweiten Polyisobutylen gemäß der erfindungsgemäßen Zusammensetzung und/oder mindestens einem Butylkautschuk wie weiter oben beschrieben, bevorzugt zumindest mindestens einem Butylkautschuk, auch in Mischung mit mindestens einem ersten und/oder mindestens einem zweiten Polyisobutlyen, und dem Material der Trägerfolie, insbesondere einem Polyethylen und/oder Polypropylen, auch Tackifier, insbesondere in Form von Kohlenwasserstoffharzen, sowie Antioxidantien und insbesondere die vorstehend bereits angesprochenen Katalysatoren und/oder Co-Reagenzien für diese aufweisen. Das Katalysatormittel und/oder Co-Reagenz kann dabei insbesondere bei höheren Temperaturen, insbesondere solchen ab etwa 50°C, bevorzugt solchen in einem Bereich von etwa 55°C bis etwa 220°C, weiter bevorzugt in einem Bereich von etwa 60°C bis etwa 140°C, die Vernetzungsreaktion in dem mindestens einen einsetzbaren Butylkautschuk, insbesondere vorvernetzten Butylkautschuk, ggf. auch in dem weiterhin vorhandenen Elastomer, wie vorstehend beschrieben, initiieren. Das Katalysatormittel, einzeln oder in Mischung, ist in der äußeren Haftvermittlungsschicht vorzugsweise in einer Menge in einem Bereich von etwa 0,1 Gew.-% bis etwa 10 Gew.-%, bevorzugt in einem Bereich von etwa 0,15 Gew.-% bis etwa 4 Gew.-%, jeweils bezogen auf die Gesamtmenge der äußeren Haftvermittlungsschicht, umfasst. Bei Wicklung oder Aufbringung des Bandes mit mindestens einer Lage aus der erfindungsgemäßen Korrosionsschutzzusammensetzung auf rohrförmigen oder sonstigen Gegenständen mit einer Überlappung kann dann bei Vorsehung von mindestens einem Katalysatormittel in der äußeren Haftvermittlungsschicht eine Vernetzung, bevorzugt bei erhöhten Temperaturen, im Überlappungsbereich initiiert werden, so dass ein festerer Halt, insbesondere ohne Faltenbildung, im Überlappungsbereich erzielbar ist.

Das Band mit der erfindungsgemäßen Korrosionsschutzzusammensetzung kann insbesondere symmetrisch oder aber asymmetrisch aufgebaut sein. Ein symmetrisch aufgebautes Band weist, wie vorstehend schon beschrieben, eine Trägerfolie beispielsweise aus mindestens einem Polyethylen und/oder Polypropylen auf, welche auf ihren beiden Außenseiten umschlossen ist von jeweils einer Lage, die aus der erfindungsgemäßen Korrosionsschutzzusammensetzung gebildet ist. Beide äußeren Lagen weisen dabei vorzugsweise in etwa die gleiche Dicke auf. Zwischen Trägerfolie und der die Korrosionsschutzzusammensetzung aufweisenden Lagen kann dabei mindestens eine Haftvermittlungsschicht vorgesehen sein, wie ebenfalls vorstehend beschrieben. Ist die Haftvermittlungsschicht auf beiden Seiten der Trägerfolie angeordnet, weist diese ebenfalls in etwa die gleiche Stärke auf. Dann spricht man von einem symmetrisch aufgebauten 3- bzw. 5-Schichten bzw. 5-Lagen-Band, zählt man die Haftvermittlungsschichten im letztgenannten Fall mit.

Es kann vorgesehen sein, ein asymmetrisch aufgebautes Band zur Verfügung zu stellen. Dieses kann beispielsweise derart aufgebaut sein, dass eine Lage, die aus der erfindungsgemäßen Korrosionsschutzzusammensetzung gebildet ist und die dem abzudeckenden Produkt zugewandt wird, verbunden ist mit einer Trägerfolie, wie vorstehend definiert. Dabei kann zwischen der die erfindungsgemäße Korrosionsschutzzusammensetzung aufweisenden Lage und der Trägerfolie mindestens eine Haftvermittlungsschicht angeordnet sein. Auf der der Lage aus der erfindungsgemäßen Korrosionsschutzzusammensetzung abgewandten Seite der Trägerfolie kann auch beispielsweise nochmalig eine Lage aus der erfindungsgemäßen Korrosionsschutzzusammensetzung vorgesehen sein, welche eine geringere Stärke als die dem zu umhüllenden Produkt zugewandte Lage aufweist. Auch kann die Trägerfolie auf der der Lage aus der erfindungsgemäßen Korrosionsschutzzusammensetzung abgewandten Seite eine weitere Haftvermittlungsschicht aufweisen, die vorzugsweise ebenfalls mindestens ein erstes und/oder mindestens ein zweites Polyisobutylen und/oder mindestens einen wie oben definierten Butylkautschuk, bevorzugt zumindest mindestens einen Butylkautschuk, auch in Mischung mit mindestens einem ersten und/oder mindestens einem zweiten Polyisobutylen, als auch das Material der Trägerfolie umfasst, und weiterhin bevorzugt zusätzlich Tackifier wie Kohlenwasserstoffharze, Katalysatormittel, Co-Reagenzien und sonstige Additive, wie vorstehend bereits beschrieben.

Im Sinne der vorliegenden Erfindung kann auch vorgesehen sein, dass das Band mit einer Lage aus der erfindungsgemäßen Korrosionsschutzzusammensetzung mindestens eine Lage einer Streckbremse umfasst. Dabei kann das Band beispielsweise derart ausgestaltet sein, dass dieses aus einer einzigen Lage aus der erfindungsgemäßen Korrosionsschutzzusammensetzung besteht, wobei in etwa mittig eine sehr dünne Zwischenlage, bevorzugt eine solche mit einer Stärke in einem Bereich von etwa 15 $\mu$m bis etwa 100 $\mu$m, weiter bevorzugt in einem Bereich von etwa 20 $\mu$m bis etwa 75 $\mu$m, eingebracht ist. Diese Zwischenlage dient als Streckbremse und verhindert eine Überdehnung des Bandes, insbesondere bei einer spiralförmigen Wicklung desselben um ein zu umhüllendes Produkt, beispielsweise eine Pipeline. Besonders bevorzugt ist die Streckbremse bzw. die Zwischenlage gebildet aus mindestens einem Polyethylen und/oder Polypropylen und ist besonders bevorzugt eine Polyethylen-Folie, insbesondere aus einem LDPE oder LLDPE. Eine solchermaßen mit einer Streckbremse versehene Lage aus der erfindungsgemäßen Korrosionsschutzzusammensetzung kann auch als zwei- oder alternativ als dreilagig angesprochen werden. Die Streckbremse kann dabei symmetrisch etwa in der Mitte, aber auch asymmetrisch verschoben zu der Oberseite oder Unterseite des Bandes in diesem angeordnet sein. Bevorzugt erfolgt jedoch eine symmetrische Anordnung etwa in der Mitte, d. h. bei halber Stärke des Bandes, soweit dieses ansonsten ausschließlich eine Lage umfasst, die aus der erfindungsgemäßen Korrosionsschutzzusammensetzung gebildet ist. Wie bereits schon vorstehend beschrieben kann jedoch auch vorgesehen sein, dass oberhalb der Streckbremse auf derjenigen Seite des Bandes, welche dem abzudeckenden Produkt abgewandt ist, eine weitere Lage angeordnet ist, die beispielweise ein Katalysatormittel aufweist, beispielsweise eine Haftvermittlungsschicht. In diesem Fall liegt ein echtes dreilagiges Band vor.

Die vorstehend angesprochenen Haftvermittlungsschichten weisen bevorzugt mindestens einen wie oben definierten Butylkautschuk und daneben gegebenenfalls das mindestens eine zweite und/oder mindestens eine dritte Polyisobutylen der erfindungsgemäßen Korrosionsschutzzusammensetzung, und mindestens ein Polyethylen und/oder Polypropylen auf. Besonders bevorzugt weisen die Haftvermittlungsschichten, so diese Polyisobutylen enthalten, mindestens ein zweites oder mindestens ein drittes Polyisobutylen, bevorzugt mindestens ein zweites Polyisobutylen, noch weiter bevorzugt genau ein zweites Polyisobutylen oder eine Mischung eines zweiten und dritten Polyisobutylens auf. Die Menge des eingesetzten mindestens einen Butylkautschuks beziehungsweise des mindestens einen zweiten und/oder dritten Polyisobutylens kann in einem Bereich von etwa 35 Gew.-% bis etwa 65 Gew.-%, weiter bevorzugt in einem Bereich von etwa 40 Gew.-% bis etwa 60 Gew.-%, jeweils bezogen auf die Gesamtmenge der Haftvermittlungsschicht, vorliegen. Das mindestens eine Polyethylen und/oder Polypropylen, bevorzugt mindestens ein Polyethylen, insbesondere ein LPDE oder LLDPE, weiter bevorzugt genau ein Polyethylen, ist von der Haftvermittlungsschicht umfasst in einer Menge in einem Bereich von etwa 25 Gew.-% bis etwa 65 Gew.-%, weiter bevorzugt in einer Menge in einem Bereich von etwa 30 Gew.-% bis etwa 60 Gew.-%, jeweils bezogen auf die Gesamtmenge der Haftvermittlungsschicht. Eine Zusammensetzung einer Haftvermittlungsschicht umfasst dabei ausschließlich den mindestens einen Butylkautschuk, und gegebenenfalls das mindestens eine zweite und/oder mindestens eine dritte Polyisobutylen, und das mindestens eine Polyethylen und/oder Polypropylen, bevorzugt genau ein zweites Polyisobutylen und/oder einen Butylkautschuk und genau ein Polyethylen, und ansonsten keine weiteren Zusätze.

Eine weitere Zusammensetzung einer Haftvermittlungsschicht umfasst neben dem mindestens einen Butylkautschuk beziehungsweise dem mindestens einen zweiten und/oder mindestens einen dritten Polyisobutylen und dem mindestens einen Polyethylen und/oder Polypropylen weitere Additive, und zwar bevorzugt Tackifier, Antioxidantien, Katalysatormittel, Co-Reagenzien, wie insbesondere oben beschrieben, als auch Farbpigmente. Dabei kann beispielsweise ein Tackifier in einer Menge in einem Bereich von etwa 5 Gew.-% bis etwa 15 Gew.-%, weiter bevorzugt in einer Menge in einem Bereich von etwa 7 Gew.-% bis etwa 13 Gew.-%, zugegen sein, und ist vorzugsweise ausgewählt aus einer Gruppe umfassend Kohlenwasserstoffharze. Darüber hinaus kann mindestens ein Antioxidationsmittel vorgesehen sein, bevorzugt in einer Menge in einem Bereich von etwa 0,05 Gew.-% bis etwa 0,5 Gew.-%, weiter bevorzugt in einer Menge von etwa 0,1 Gew.-% bis etwa 0,5 Gew.-%. Das Antioxidationsmittel kann dabei insbesondere ausgewählt sein aus einer Gruppe umfassend sterisch gehinderte Phenole, wie beispielsweise Pentaerythriol-Tetrakis (3-(3,5-di-ter-butyl-4-Hydroxyphenyl)Propionat). Daneben kann die Haftvermittlungsschicht auch mindestens ein Pigment aufweisen, insbesondere ein solches, welches in Form eines Masterbatches vorliegt. Das mindestens eine Pigment ist in einer Menge in einem Bereich von etwa 0,5 Gew.-% bis etwa 3 Gew.-%, weiter bevorzugt in einer Menge in einem Bereich von etwa 0,9 Gew.-% bis etwa 2 Gew.-%, in einer Zusammensetzung der Haftvermittlungsschicht vorhanden. Die vorgenannten Gew.-%-Angaben betreffend den Tackifier, das Antioxidationsmittel und das Pigment beziehen sich jeweils auf die Gesamtmenge der Haftvermittlungsschicht. Das Pigment kann beispielsweise ein Schwarzpigment sein, um dem Band einen einheitlichen Gesamteindruck zu vermitteln. Es kann jedoch auch zur Hervorhebung und Kenntlichmachung des Vorhandenseins einer Haftvermittlungsschicht ein jedwedes anderes Pigment, beispielsweise ein rotfarbiges, eingesetzt werden. Die Haftvermittlungsschicht hat vorzugsweise eine Stärke in einem Bereich von etwa 10 $\mu$m bis etwa 150 $\mu$m, weiter bevorzugt eine Stärke in einem Bereich von etwa 20 $\mu$m bis etwa 100 $\mu$m, noch weiter bevorzugt eine Stärke in einem Bereich von etwa 25 $\mu$m bis etwa 80 $\mu$m.

Die Trägerfolie, soweit sie nicht als Streckbremse ausgestaltet ist, weist vorteilhafterweise eine Stärke in einem Bereich von etwa 0,2 mm bis etwa 1,2 mm, weiter bevorzugt eine Stärke in einem Bereich von etwa 0,3 mm bis etwa 0,8 mm, auf. Die Trägerfolie besteht vorteilhafterweise aus Polyethylen oder Polypropylen, und besteht bevorzugt aus einem Polyethylen. Besonders bevorzugt ist die Trägerfolie ausgebildet aus einer Gruppe umfassend Polyethylene, die elektronenstrahlvernetzbar sind. Wird die Trägerfolie mit Haftvermittlungsschichten eingesetzt, ist in den Haftvermittlungsschichten ebenfalls ein Polyethylen eingesetzt, welches elektronenstrahlvernetzbar ist, bevorzugt das gleiche Polyethylen, wie dieses auch in der Trägerfolie vorhanden ist. Weiter vorteilhafterweise ist die Trägerfolie einer leichten Reckung unterzogen worden, so dass vorteilhafterweise eine Schrumpfneigung bei Erwärmung derselben entsteht und eine mögliche Längenausdehnung bei Erwärmung überkompensiert werden kann. Zudem wird bei einer Anwendung in Form einer Umwicklung rohrförmiger Gegenstände dann auch die Anpresskraft in Richtung auf den rohrförmigen Gegenstand verstärkt.

Weist die Trägerfolie auf einer oder auf beiden Seiten eine Haftvermittlungsschicht auf, so wird der gesamte Verbund bevorzugt einer leichten Reckung unterzogen. Ein derartig hergestellter Folienverbund wird dann nachfolgend mit der erfindungsgemäßen Korrosionsschutzzusammensetzung auf mindestens einer Seite beschichtet. Diese Schicht weist vorteilhafterweise eine Stärke in einem Bereich von etwa 0,25 mm bis etwa 2,0 mm, weiter bevorzugt eine Stärke in einem Bereich von etwa 0,35 mm bis etwa 1,3 mm auf. Wird die Trägerfolie auf beiden Seiten mit einer Haftvermittlungsschicht versehen und ist die Trägerfolie nur auf einer Seite mit der erfindungsgemäßen Korrosionsschutzzusammensetzung beschichtet, weist die äußere Haftvermittlungsschicht vorteilhafterweise Katalysatoren auf, ggf. auch Co-Reagenzien hierfür, wie vorstehend beschrieben. Die Zusammensetzung der auf beiden Seiten der Trägerfolie angeordneten Haftvermittlungsschichten kann damit besonders bevorzugt im Sinne der vorliegenden Erfindung unterschiedlich sein. Der vorstehend beschriebene Bandaufbau weist den Vorteil auf, dass einerseits im Überlappungsbereich bei Umhüllung oder Aufbringung eines solchen Bandes durch das vorgesehene Katalysatormittel ebenfalls eine Vernetzungsreaktion, soweit insbesondere der mindestens eine Butylkautschuk zugegen ist, initiiert wird, und, gleich ob mit Überlappung aufgebracht oder nicht, das Band z. B. von einem identischen weiteren Band umwickelt werden kann, wobei dann das in der äußeren Haftvermittlungsschicht vorhandene mindestens eine Katalysatormittel die Vernetzung des diesem zugewandten, die erfindungsgemäße Korrosionsschutzzusammensetzung aufweisenden Teiles des weiteren Bandes initiiert. Die Trägerfolie kann weitere Additive umfassen, beispielweise Pigmente, Antioxidationsmittel oder Stabilisatormittel/Dispergierhilfsmittel. In einer weiteren Ausgestaltung der vorliegenden Erfindung kann die erfindungsgemäße Korrosionsschutzzusammensetzung auch auf einer Seite einer Schrumpfmanschette oder eines Schrumpfbandes aufgebracht sein. Zusätzlich zu der Vermittlung einer guten Haftung durch Vernetzung aufgrund der spezifischen Zusammensetzung der erfindungsgemäßen Korrosionsschutzzusammensetzung kann aufgrund der für die Schrumpfung erforderlichen Erwärmung der Schrumpfmanschette bzw. des Schrumpfbandes eine weitergehende thermische Aktivierung der erfindungsgemäßen Korrosionsschutzzusammensetzung erfolgen, so dass die Vernetzungsreaktion gefördert wird und ein noch festerer Halt eines solchen Systems auf insbesondere einem rohrförmigen Gegenstand ermöglicht ist.

Zusätzlich zu dem vorstehend geschilderten mindestens einlagigen Band mit der erfindungsgemäßen Korrosionsschutzzusammensetzung kann ein zweites Band zur Vermittlung eines mechanischen Schutzes vorgesehen sein. Das zweite Band ist mindestens einlagig aufgebaut, und ist bevorzugt ein-, zwei- oder dreilagig aufgebaut. Es kann jedoch auch vier- oder sonst wie höherlagig aufgebaut sein. Das zweite Band ist als mechanisches Schutzband anzusprechen. Das zweite Band umfasst bevorzugt eine Lage aus mindestens einem Polyethylen und/oder Polypropylen, bevorzugt mindestens einem Polyethylen, bevorzugt elektronenstrahlvernetzbares Polyethylen, ausreichender Stärke. Soweit Polyethylen eingesetzt wird, weist dieses vorzugsweise eine Reißdehnung gemäß EN ISO 527 in der Version von 2012-06 von > 300 %, weiter bevorzugt > 400 %, noch weiter bevorzugt > 500 %, bevorzugt eine solche in einem Bereich von etwa 300 % bis etwa 800 %, auf. Weiter bevorzugt weist es eine Zugspannung gemäß EN ISO 527 in der Version von 2012-06 in einem Bereich von etwa 8 MPa bis etwa 25 MPa, weiter bevorzugt in einem Bereich von etwa 12 MPa bis etwa 20 MPa, auf. Das zweite Band kann beispielsweise auch eingesetzt werden, um zwei identische Bänder mit der erfindungsgemäßen Korrosionsschutzzusammensetzung um einen rohrförmigen Gegenstand zu wickeln. Die Identität der vorstehend genannten Bänder mit der erfindungsgemäßen Korrosionsschutzzusammensetzung besteht vorteilhafterweise in einem identischen Aufbau und/oder identischer chemischer Zusammensetzung.

Die mindestens eine Lage aus Polyethylen und/oder Polypropylen, bevorzugt genau eine Lage, des zweiten Bandes kann auf einer Seite mit einer Klebeschicht versehen sein. Es kann jedoch auch vorgesehen sein, dass diese auf einer Seite mit einer Klebeschicht aus mindestens einem ersten und/oder mindestens einem zweiten Polyisobutylen gemäß der erfindungsgemäßen Korrosionsschutzzusammensetzung gebildet ist. Diese Schicht kann neben dem mindestens einen ersten und/oder mindestens einem zweiten Polyisobutylen noch weitere Additive wie Antioxidationsmittel, Kohlenwasserstoffharz als Tackifier, Prozessöle als Weichmacher, Pigmente o. ä. umfassen. Soweit eine Kleberschicht, wie vorstehend beschrieben, mit der Lage aus mindestens einem Polyethylen und/oder Polypropylen verbunden wird, wird dabei vorzugsweise für das zweite Band vorgesehen, dass zwischen diesen beiden Lagen eine Schicht zur Erzielung einer hinreichenden Haftung vorgesehen ist, wobei diese eine Zusammensetzung aufweisen kann, wie diese im Zusammenhang mit dem Band mit der erfindungsgemäßen Korrosionsschutzzusammensetzung weiter oben beschrieben ist.

Darüber hinaus kann weiterhin noch eine Rohrschutzmatte vorgesehen sein, welche um das mindestens eine Band mit mindestens einer Lage aus der erfindungsgemäßen Korrosionsschutzzusammensetzung, ggf. auch in Kombination mit einem zweiten Band, welches als Abdeck- und Schutzband dient, angeordnet ist, wodurch eine vorteilhafte, insbesondere lastverteilende Wirkung auf die unter der Rohrschutzmatte liegende Umhüllung aus dem mindestens einen Band vermittelt wird.

Mit der erfindungsgemäßen Korrosionsschutzzusammensetzung kann jedwedes Produkt, welches korrodieren kann, geschützt werden, insbesondere durch Abdeckung bei Vorliegen in Band- oder Matten-(Folien)-Form oder aber Verstreichen und Verspachteln der Masse zu Bildung einer Beschichtung. Besonders bevorzugt wird die erfindungsgemäße Korrosionsschutzzusammensetzung für Rohre und Anlagen mit Rohren eingesetzt. Insbesondere wird die erfindungsgemäße Korrosionsschutzzusammensetzung eingesetzt für die Umhüllung von Pipelines gleich welcher Art, aber auch zur Umhüllung von Gasleitungen etc. Sie kann auch eingesetzt werden für sonstige technische Anlagen und/oder in Bereichen, in welchen Korrosion auftreten kann, und dabei nicht nur in Form einer Wicklung, sondern auch z. B. in Form einer Auflage/Abdeckung, das Vorstehende bei Ausbildung als mindestens einlagiges Band oder mindestens einlagige Matte, oder aber in Form einer Beschichtung aus einer streichfähigen bzw. spachtelfähigen Masse der erfindungsgemäßen Korrosionsschutzzusammensetzung.

Die vorliegende Erfindung betrifft weiterhin die Verwendung der erfindungsgemäßen Korrosionsschutzzusammensetzung wie weiter vorstehend beschrieben zum Schutz von Rohren und Rohre umfassenden Anlagen sowie sonstigen Anlagen und Einbauten vor Korrosion. Des Weiteren betrifft die vorliegende Erfindung auch ein Verfahren zur Erzielung eines Korrosionsschutzes auf Rohren und Rohre umfassenden Anlagen sowie sonstigen Anlagen und Einbauten durch Aufbringung der erfindungsgemäßen Korrosionsschutzzusammensetzung. Besonders bevorzugt bei dem erfindungsgemäßen Verfahren wird mindestens ein einlagiges Band, umfassend die erfindungsgemäße Korrosionsschutzzusammensetzung, um Rohre bzw. Rohre umfassende Anlagen gewickelt. Und schließlich betrifft die vorliegende Erfindung ein mindestens einlagiges Wickelband, umfassend die erfindungsgemäße Korrosionsschutzzusammensetzung wie vorstehend beschrieben.

Die vorliegende Erfindung betrifft außerdem ein Band und eine Matte jeweils umfassend die hierin beschriebenen Korrosionsschutzzusammensetzungen sowie die Verwendung der hierin beschriebenen Korrosionsschutzzusammensetzungen als Band oder Matte oder in Band- oder Mattenform; hierbei kann das Band oder die Matte jeweils einlagig, zweilagig oder mehrlagig, wie oben beschrieben, aufgebaut sein. Bei dem Band kann es sich insbesondere um ein Wickelband handeln. Mit dem Wickelband können Rohre bzw. Rohre umfassende Anlagen umwickelt werden.

Die vorliegende Erfindung wird anhand der nachfolgenden Beispiele näher erläutert. Es sei an dieser Stelle vorausgeschickt, dass die in den Beispielen angegebenen Merkmale solche sind, die mit sämtlichen einzeln oder miteinander in der allgemeinen Beschreibung beschriebenen Merkmalen kombinierbar sind. Insbesondere ist die Zusammensetzung der erfindungsgemäßen Korrosionsschutzzusammensetzung in Bandform nur eine beispielhafte.

Es wurden insgesamt fünf Vergleichszusammensetzungen 1 bis 5 und zwei erfindungsgemäße Korrosionsschutzzusammensetzungen 6 und 7 hergestellt, wobei deren genauere Zusammensetzung der nachfolgenden Tabelle entnommen werden kann, in der auch die Schälfestigkeiten/Schälwiderstände, bestimmt gemäß DIN EN 12068 in der Version 1999-03, angegeben sind.

Alle Zahlenwerte in der nachfolgenden Tabelle sind - falls nicht anders angegeben - in Gewichts-% (Gew.-%), jeweils bezogen auf die Gesamtmenge einer jeden der Zusammensetzungen 1 bis 7.

| Zusammensetzung Nr. | 1 | 2 | 3 | 4 | 5 | 6 | 7 |
|---|---|---|---|---|---|---|---|
| Erstes Polyisobutylen | 30 | 39,1 | 32,5 | 33 | 30 | 40 | 40 |
| Zweites Polyisobutylen | | | | | | 20 | 20 |
| Standard Butylkautschuk | 10 | 17,4 | 9,5 | 10 | 10 | | |
| Drittes Polyisobutylen | | | | | | 5 | |
| Vorvernetzter Butylkautschuk | | | | | | | 5 |
| Pulverförmiges, mineralisches Füllmaterial | 60 | 34,8 | 57 | 57 | 60 | 18,7 | 18,7 |
| Tackifier | | 8,7 | | | | | |
| Faserförmiges, mineralisches Füllmaterial | | | | | | 16 | 16 |
| Antioxidationsmittel | | | | | | 0,2 | 0,2 |
| Stabilisationsmittel | | | | | | 0,1 | 0,1 |
| Schälfestigkeit/Schälwiderstand [N/cm] | 3,4 | 3,1 | 2,1 | 2,6 | 3,5 | 8,9 | 13,1 |

Das in den Zusammensetzungen 1 bis 7 eingesetzte erste Polyisobutylen ist stets identisch und entsprach dem besonders bevorzugten ersten Polyisobutylen wie weiter oben definiert. Das in den erfindungsgemäßen Zusammensetzungen 6 und 7 eingesetzte zweite Polyisobutylen entsprach dem besonders bevorzugten zweiten Polyisobutylen wie weiter oben beschrieben. Der nur in den Vergleichszusammensetzungen 1 bis 5 eingesetzte Standard-Butylkautschuk wies ein mittleres Molekulargewicht $M_w$ zwischen 250.000 und 550.000 auf. Das in der Zusammensetzung 6 eingesetzte dritte Polyisobutylen entsprach einem solchen, wie weiter oben als besonders bevorzugt definiert. Der in der Zusammensetzung 7 eingesetzte vorvernetzte Butylkautschuk entsprach dem weiter oben in der Beschreibung als besonders bevorzugt definierten Butylkautschuk. Als pulverförmiges, mineralisches Füllmaterial wurde ein Talkum eingesetzt, das ein natürliches Gemenge aus Magnesium Silicat-Hydrat und Magnesium-Aluminium-Silicat-Hydrat mit ausgeprägter Plättchen-Struktur darstellt. Als faserförmiges mineralisches Füllmaterial wurde ein Wollastonit mit ausgeprägter Nadelstruktur eingesetzt. Als Stabilisationsmittel wurde Stearinsäure eingesetzt, das eingesetzte Antioxidationsmittel entsprach üblichen marktgängigen Antioxidationsmitteln.

Das in den Zusammensetzungen 1 bis 7 eingesetzte erste Polyisobutylen wies einen Staudinger-Index $J_0$ in einem Bereich von 25 cm$^3$/g bis 54 cm$^3$/g und eine mittlere relative Molmasse $\overline{M}_v$ (Viskositätsmittel) in einem Bereich von 30.000 g/mol bis 99.000 g/mol auf. Das in den Zusammensetzungen 6 und 7 eingesetzte zweite Polyisobutylen wies einen Staudinger-Index $J_0$ in einem Bereich von 74 cm$^3$/g bis 238 cm$^3$/g und eine mittlere relative Molmasse $\overline{M}_v$ (Viskositätsmittel) in einem Bereich von 160.000 g/mol bis 970.000 g/mol auf. Das in der Zusammensetzung 6 eingesetzte dritte Polyisobutylen wies einen Staudinger-Index $J_0$ in einem Bereich von 240 cm$^3$/g bis 665 cm$^3$/g und eine mittlere relative Molmasse $\overline{M}_v$ (Viskositätsmittel) in einem Bereich von 980.000 g/mol bis 4.700.000 g/mol auf.

Die Korrosionsschutzzusammensetzungen 1 bis 7 gemäß obiger Tabelle wurden hergestellt in Form eines dreilagigen Bandes mit einer Lage aus den genannten Zusammensetzungen auf einer Trägerfolie aus Polyethylen, die auf der der Zusammensetzung zugewandten Seite eine Haftvermittlungsschicht aufwies. Mit diesem dreilagigen Band wurde ein Stahlrohr bei Raumtemperatur bei 23°C nicht überlappend umwickelt. Dabei ergaben sich bei der Bestimmung der Schälfestigkeit/des Schälwiderstandes die in der obigen Tabelle angegebenen Werte. Hierbei wird deutlich, das die erfindungsgemäßen Zusammensetzungen 6 und 7 deutlich höhere Werte für den Schälwiderstand/die Schälfestigkeit aufweisen als die nicht erfindungsgemäßen Zusammensetzungen 1 bis 5. Die Zusammensetzungen 6 und 7 ergaben auch sehr gute kohäsive Trennbilder bei einer sehr guten Benetzung des Stahls.

Die durchgeführten Versuche zeigen, dass mit der erfindungsgemäßen Korrosionsschutzzusammensetzung vorteilhafte Werte in Hinblick auf die Schälfestigkeit/den Schälwiderstand, bestimmt gemäß DIN 12068 in der Version 1999-03, erzielbar sind, und auch sehr gute kohäsive Trennbilder erzeugbar sind. Auch erfolgt eine gute Benetzung des Untergrundes, insbesondere eines Stahlrohres. Es wurden keine Voranstrichmittel bzw. Primer oder Haftvermittler eingesetzt. Diese sind auch nicht notwendigerweise einzusetzen, um die Norm gemäß DIN EN 12068 in der Version 1999-03 zu erfüllen.

Der erfindungsgemäß mögliche Verzicht auf Voranstrichmittel bzw. Primer oder Haftvermittler hat den Vorteil, dass weniger Aufwand beim Aufbringen der Korrosionsschutzzusammensetzung betrieben werden muss. Vorteilhaft ist ebenfalls, dass ohne Verwendung von Voranstrichmittel bzw. Primer oder Haftvermittler, insbesondere solchen, die Benzin als Lösungsmittel enthalten, der Umweltschutz verbessert wird. Darüber hinaus wird der Transport der erfindungsgemäßen Korrosionsschutzzusammensetzung vereinfacht, weil Voranstrichmittel bzw. Primer oder Haftvermittler hierfür, die Benzin als Lösungsmittel enthalten, aus Sicherheitsgründen nicht ohne weiteres in Luftfahrzeugen transportiert werden dürfen.

Bevorzugt ist daher ist die Verwendung der erfindungsgemäßen Korrosionsschutzzusammensetzung zum Schutz von Rohren, Rohre umfassenden Anlagen, sonstigen Anlagen und/oder Einbauten vor Korrosion, bei der keine Voranstrichmittel bzw. Primer oder Haftvermittler, insbesondere keine solchen, die Benzin als Lösungsmittel enthalten, eingesetzt werden.

Ebenfalls bevorzugt ist ein Verfahren zur Erzielung eines Korrosionsschutzes auf Rohren, Rohre umfassenden Anlagen, sonstigen Anlagen und/oder Einbauten durch Aufbringung der erfindungsgemäßen Korrosionsschutzzusammensetzung, bei dem keine Voranstrichmittel bzw. Primer oder Haftvermittler, insbesondere keine solchen, die Benzin als Lösungsmittel enthalten, eingesetzt werden.

Mit der vorliegenden Erfindung wird eine Korrosionsschutzzusammensetzung zur Verfügung gestellt, welche sowohl in streichfähiger bzw. spachtelfähiger Form als auch in Form eines Bandes oder Schrumpfmanschette, in welcher Ausführung auch immer, eingesetzt werden kann und dabei sehr gute Hafteigenschaften aufweist und auf diese Weise einen langlebigen Korrosionsschutz den mit dieser versehenen Produkte, Anlagen, Einbauten, Rohre, Pipelines etc. vermittelt. Vorteilhafterweise kann diese, in welcher Form auch immer, ohne einen Primer/Haftvermittler eingesetzt werden.

## Patentansprüche

1. Korrosionsschutzzusammensetzung umfassend mindestens ein erstes Polyisobutylen mit einem Staudinger-Index $J_0$ in einem Bereich von etwa 15 $cm^3/g$ bis etwa 98 $cm^3/g$ und einer mittleren relativen Molmasse $\overline{M}_v$ im einem Bereich von etwa 32.000 g/mol bis etwa 280.000 g/mol und mindestens ein zweites Polyisobutylen mit einem Staudinger-Index $J_0$ in einem Bereich von etwa 105 $cm^3/g$ bis etwa 238 $cm^3/g$ und einer mittleren relativen Molmasse $\overline{M}_v$ in einem Bereich von etwa 350.000 g/mol bis etwa 900.000 g/mol.

2. Zusammensetzung gemäß Anspruch 1, **dadurch gekennzeichnet, dass** das mindestens eine erste Polyisobutylen in einer Menge in einem Bereich von etwa 25 Gew.-% bis etwa 60 Gew.-%, bezogen auf die Gesamtmenge der Zusammensetzung, von dieser umfasst ist.

3. Zusammensetzung gemäß einem oder mehreren der vorhergehenden Ansprüche, **dadurch gekennzeichnet, dass** das mindestens eine zweite Polyisobutylen in einer Menge in einem Bereich von etwa 10 Gew.-% bis etwa 40 Gew.-%, bezogen auf die Gesamtmenge der Zusammensetzung, von dieser umfasst ist.

4. Zusammensetzung gemäß einem oder mehreren der vorhergehenden Ansprüche, **dadurch gekennzeichnet, dass** diese weiterhin mindestens ein drittes Polyisobutylen mit einem Staudinger-Index $J_0$ in einem Bereich von etwa 240 $cm^3/g$ bis etwa 900 $cm^3/g$ und einer mittleren relativen Molmasse $\overline{M}_v$ in einem Bereich von etwa 950.000 g/mol bis etwa 5.500.000 g/mol umfasst.

5. Zusammensetzung gemäß einem oder mehreren der vorhergehenden Ansprüche, **dadurch gekennzeichnet, dass** diese weiterhin umfasst mindestens ein Füllmaterial, mindestens ein Antioxidationsmittel, mindestens ein Vernetzungsmittel, mindestens ein Elastomer und/oder mindestens ein Stabilisationsmittel.

**6.** Korrosionsschutzzusammensetzung gemäß Anspruch 5, **dadurch gekennzeichnet, dass** diese mindestens ein Füllmaterial in einer Menge in einem Bereich von etwa 20 Gew.-% bis etwa 70 Gew.-%, bezogen auf die Gesamtmenge der Zusammensetzung, umfasst.

**7.** Zusammensetzung gemäß einem oder mehreren der Ansprüche 5 oder 6, **dadurch gekennzeichnet, dass** das mindestens eine Füllmaterial pulverförmig oder faserförmig ist.

**8.** Zusammensetzung gemäß einem oder mehreren der Ansprüche 5 bis 7, **dadurch gekennzeichnet, dass** die Zusammensetzung ein erstes pulverförmiges Füllmaterial und ein zweites faserförmiges Füllmaterial umfasst.

**9.** Zusammensetzung gemäß einem oder mehreren der vorhergehenden Ansprüche 5 bis 8, **dadurch gekennzeichnet, dass** das mindestens eine Elastomer ausgewählt ist aus einer Gruppe umfassend mindestens einen Butylkautschuk.

**10.** Zusammensetzung gemäß Anspruch 9, **dadurch gekennzeichnet, dass** der mindestens eine Butylkautschuk vorvernetzt ist.

**11.** Zusammensetzung gemäß einem oder mehreren der Ansprüche 9 oder 10, **dadurch gekennzeichnet, dass** der mindestens eine Butylkautschuk in einer Menge in einem Bereich von etwa 1 Gew.-% bis etwa 20 Gew.-%, bezogen auf die Gesamtmenge der Zusammensetzung, von der Zusammensetzung umfasst ist.

**12.** Zusammensetzung gemäß einem oder mehreren der vorhergehenden Ansprüche, **dadurch gekennzeichnet, dass** diese in Bandform oder Mattenform vorliegt

**13.** Zusammensetzung gemäß Anspruch 12, **dadurch gekennzeichnet, dass** das Band zweilagig oder mehrlagig aufgebaut ist, wobei mindestens eine Lage die Zusammensetzung umfasst.

**14.** Verwendung einer Korrosionsschutzzusammensetzung gemäß einem oder mehreren der Ansprüche 1 bis 13 zum Schutz von Rohren und Rohre umfassenden Anlagen sowie sonstigen Anlagen und Einbauten vor Korrosion.

**15.** Verfahren zur Erzielung eines Korrosionsschutzes auf Rohren und Rohre umfassenden Anlagen sowie sonstige Anlagen und Einbauten durch Aufbringung der Zusammensetzung gemäß einem oder mehreren der Ansprüche 1 bis 13.

**16.** Verfahren gemäß dem Anspruch 15, **dadurch gekennzeichnet, dass** Rohre bzw. Rohre umfassende Anlagen mit einem mindestens einschichtigen Band, umfassend die Zusammensetzung, umwickelt werden.

**17.** Mindestens einlagiges Wickelband, umfassend die Zusammensetzung gemäß einem oder mehreren der Ansprüche 1 bis 13.

**Claims**

**1.** Anti-corrosion composition comprising at least a first polyisobutylene with a Staudinger index $J_0$ ranging from about 15 $cm^3$/g to about 98 $cm^3$/g and an average relative molar mass $\overline{M}_v$ ranging from about 32,000 g/mol to about 280,000 g/mol and at least a second polyisobutylene with a Staudinger index $J_0$ ranging from about 105 $cm^3$/g to about 238 $cm^3$/g and an average relative molar mass $\overline{M}_v$ ranging from about 350,000 g/mol to about 900,000 g/mol.

**2.** Composition according to claim 1, **characterized in that** the at least one first polyisobutylene is comprised by the composition in an amount ranging from about 25% by weight to about 60% by weight, based on the total amount of the composition.

**3.** Composition according to one or more of the preceding claims, **characterized in that** the at least one second polyisobutylene is comprised by the composition in an amount ranging from about 10% by weight to about 40% by weight, based on the total amount of the composition.

**4.** Composition according to one or more of the preceding claims, **characterized in that** it furthermore comprises at least a third polyisobutylene with a Staudinger index $J_0$ ranging from about 240 cm$^3$/g to about 900 cm$^3$/g and an average relative molar mass $\overline{M}_v$ ranging from about 950,000 g/mol to about 5,500,000 g/mol.

5. Composition according to one or more of the preceding claims, **characterized in that** it furthermore comprises at least one filler material, at least one antioxidant, at least one cross-linking agent, at least an elastomer and/or at least one stabilizer.

6. Anti-corrosion composition according to claim 5, **characterized in that** it comprises at least one filler material in an amount ranging from about 20% by weight to about 70% by weight, based on the total amount of the composition.

7. Composition according to one or more of the claims 5 or 6, **characterized in that** the at least one filler material is powdery or fibrous.

8. Composition according to one or more of the claims 5 to 7, **characterized in that** the composition comprises one first powdery filler material and one second fibrous filler material.

9. Composition according to one or more of the preceding claims 5 to 8, **characterized in that** the at least one elastomer is selected from a group comprising at least one butyl rubber.

10. Composition according to claim 9, **characterized in that** the at least one butyl rubber is pre-crosslinked.

11. Composition according to one or more of the claims 9 or 10, **characterized in that** the at least one butyl rubber is comprised by the composition in an amount ranging from about 1% by weight to about 20% by weight, based on the total amount of the composition.

12. Composition according to one or more of the preceding claims, **characterized in that** it is provided in tape format or pad format.

13. Composition according to claim 12, **characterized in that** the tape has a two or multilayered structure, wherein at least one layer comprises the composition.

14. Use of an anti-corrosion composition according to one or more of the claims 1 to 13 to protect pipes and systems comprising pipes as well as other plants and installations from corrosion.

15. Method to achieve corrosion protection on pipes and systems comprising pipes as well as other plants and installations by applying the composition according to one or more of the claims 1 to 13.

16. Method according to claim 15, **characterized in that** pipes respectively systems comprising pipes are wrapped with an at least single-layered tape comprising the composition.

17. An at least single-layered wrapping tape comprising the composition according to one or more of the claims 1 to 13.

**Revendications**

1. Composition anticorrosion comprenant au moins un premier polyisobutylène ayant un indice de Staudinger $J_0$ compris entre 15 cm$^3$/g environ et 98 cm$^3$/g environ, et une masse molaire relative moyenne $M_v$ comprise entre 32.000 g/mol environ et 280.000 g/mol environ, et au moins un deuxième polyisobutylène ayant un indice de Staudinger $J_0$ compris entre 105 cm$^3$/g environ et 238 cm$^3$/g environ et une masse molaire relative moyenne Mv comprise entre 350.000 g/mol environ et 900.000 g/mol environ.

2. Composition selon la revendication 1, **caractérisée en ce que** ledit au moins un premier polyisobutylène est compris dans celle ci, en une quantité située dans une plage comprise entre environ 25 % en poids et environ 60 % en poids, en rapport à la quantité totale de ladite composition.

3. Composition selon l'une ou plusieurs des précédentes revendications, **caractérisée en ce que** ledit au moins un deuxième polyisobutylène est compris dans celle ci, en une quantité située dans une plage comprise entre environ 10 % en poids et environ 40 % en poids, en rapport à la quantité totale de ladite composition.

4. Composition selon l'une ou plusieurs des précédentes revendications, **caractérisée en ce que** celle-ci comporte, en outre, au moins un troisième polyisobutylène ayant un indice de Staudinger $J_0$ compris entre 240 cm$^3$/g environ et 900 cm$^3$/g environ, et une masse molaire relative moyenne $M_v$ comprise entre 950.000 g/mol environ et 5.500.000 g/mol environ.

5. Composition selon l'une ou plusieurs des précédentes revendications, **caractérisée en ce que** celle-ci comporte, en outre, au moins un matériau de remplissage, au moins un antioxydant, au moins un agent de réticulation, au moins un élastomère et/ou au moins un agent de stabilisation.

6. Composition anticorrosion selon la revendication 5, **caractérisée en ce que** celle-ci comporte au moins un matériau de remplissage en une quantité située dans une plage comprise entre environ 20 % en poids et environ 70 % en poids, en rapport à la quantité totale de ladite composition.

7. Composition selon l'une ou plusieurs des revendications 5 ou 6, **caractérisée en ce que** ledit au moins le matériau de remplissage est sous forme de poudre ou sous forme de fibres.

8. Composition selon l'une ou plusieurs des précédentes revendications 5 à 7, **caractérisée en ce que** ladite composition comporte un premier matériau de remplissage sous forme de poudre et un deuxième matériau de remplissage sous forme de fibres.

9. Composition selon l'une ou plusieurs des précédentes revendications 5 à 8, **caractérisée en ce que** ledit au moins un élastomère est choisi à partir d'un groupe comportant au moins un caoutchouc butyle.

10. Composition selon la revendication 9, **caractérisée en ce que** ledit au moins un caoutchouc butyle est pré-réticulé.

11. Composition selon l'une ou plusieurs des revendications 9 ou 10, **caractérisée en ce que** ledit au moins un caoutchouc butyle est compris dans ladite composition en une quantité située dans une plage comprise entre environ 1 % en poids et environ 20 % en poids, en rapport à la quantité totale de ladite composition.

12. Composition selon l'une ou plusieurs des précédentes revendications, **caractérisée en ce que** celle-ci est sous forme de bande ou sous forme de tapis.

13. Composition selon la revendication 12, **caractérisée en ce que** ladite bande est constituée de deux ou plusieurs couches, au moins une couche comportant ladite composition.

14. Utilisation d'une composition anticorrosion selon une ou plusieurs des revendications 1 à 13, pour la protection de tuyaux et installations comportant des tuyaux ainsi que d'autres installations et constructions, contre la corrosion.

15. Procédé pour obtenir une protection contre la corrosion sur des tuyaux et installations comportant des tuyaux ainsi que d'autres installations et constructions, par application de la composition selon l'une ou plusieurs des revendications 1 à 13.

16. Procédé selon la revendication 15, **caractérisé en ce que** des tuyaux ou installations comportant des tuyaux sont enroulés avec au moins une bande monocouche, comportant la composition.

17. Bande d'enroulement au moins monocouche, comportant la composition selon l'une ou plusieurs des revendications 1 à 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0421607 A1
- EP 3059485 A1